# EUROPEAN PATENT SPECIFICATION

(11) **EP 3 351 467 B1**
(45) Date of publication and mention of the grant of the patent: **22.07.2020**
(21) Application number: 15904004.7
(22) Date of filing: 15.09.2015
(51) Int. Cl.: B62J 9/23, B62J 9/30

(54) **CASE FOR MOTORCYCLES**
BOX FÜR MOTORRÄDER
VALISE POUR MOTOCYCLETTES

(43) Date of publication of application: 25.07.2018
(73) Proprietor: NAD, S.L., 08100 Mollet Del Valles, Barcelona (ES)
(72) Inventor: BARCELÓ, Jorge, Gustavo, 08100 Mollet del Valles (Barcelona) (ES); AYALA GONZÁLEZ, Pere, 08100 Mollet del Valles (Barcelona) (ES)
(74) Representative: Herrero & Asociados, S.L.
(86) International application number: PCT/ES2015/070665
(87) International publication number: WO 2017/046425

(56) References cited:
- DE-A1- 4 331 076
- ES-T3- 2 300 029
- ES-T3- 2 373 249
- FR-A1- 2 973 329
- US-A- 6 116 064

## Description

The present invention relates to a case for motorcycles, the inner volume of which can be increased at the will of the user.

### Background of the invention

The use of cases on motorcycles to store objects of the user of the same, for example, the helmet is very common.

These cases are placed in the rear portion of the motorcycle or on the sides, and comprise a base provided with a lid, which can be closed on the base by means of a lock with key to prevent the unwanted opening of the case.

Based on their needs, the user can choose cases of different dimensions, but the cases for motorcycles usually have a fixed inner volume, which cannot be changed in the case that the user occasionally wants a larger volume.

To solve this problem, cases that are expandable are already known; in other words, a part of the base or the lid comprises a flexible or telescopic part that enables the extension thereof, with the design limitations that it entails.

Although these variable volume cases carry out their function of providing additional volume when the user needs it, they entail an additional cost for the manufacturer of these types of cases, since they require the lock to be different for these cases in order to be adapted to the change in the inner volume of the case.

US6116064 A discloses a case according to the preamble of claim 1. In US6116064 A, a helmet restraining and locking device is provided including a plurality of rigid, semi-circular portions each defined by a section of a full sphere. The semi-circular portions have an extended orientation defining a hemispherical cover and an open retracted orientation.

DE4331076 A1 discloses a luggage container, in particular for two-wheeled vehicles, with a container body which can be varied in dimensions and can be closed by a lid. The container body is formed by a number of segments which each comprise two essentially circular sector-shaped side walls and an outer wall which connects the circumferential edges of the two circular sector-shaped side walls to one another to form a U-shaped segment.

Therefore, the objective of the present invention is to provide a case for motorcycles, the design of which is flexible, being able to have different outer shapes, such as aerodynamic and more visually attractive shapes for the user, and also enables the same lock as those on fixed volume cases to be used, with the corresponding cost savings for the manufacturer, which will use a single lock type for their cases.

### Description of the invention

The case for motorcycles of the invention resolves the aforementioned drawbacks and has other advantages which are described below.

The case for motorcycles according to the present invention comprises a base and a lid that define an inner housing, the case also comprising a lock for locking the lid and the base together, preventing access to the inner housing, and it further comprises an extension that pivots about a longitudinal axis of the lock, between at least a first and a second position, said second position defining a volume of the inner housing greater than the volume of the inner housing when the extension is in said first position.

Given this characteristic, the expandable case can be more freely designed than conventional expandable cases. Furthermore, it enables the lock to be the same as those on fixed volume conventional cases, reducing the manufacturing costs for the manufacturer of the case, using the existing lock.

Advantageously, said extension is fixed to said lid in the pivoting movement thereof between said first and second positions, or vice versa, such that the lid will be moved along with the extension when it is moved.

Furthermore, said extension is preferably mounted on said base in a slidable way between said first and second positions, and it comprises a border that in said second position butts against a complementary border of the base when the lid is in said second position.

Preferably, the height of the extension is greater on the side farthest from the lock than on the side of the lock, the height descending from said side farthest from the lock to the side of the lock.

The case for motorcycles according to the present invention further comprises a latch for unlocking the extension and moving it between said first and second positions, or vice versa, and said extension comprises a protrusion that slides inside a groove, the protrusion of which is complementary to one or more housings of the latch, such that the extension can be locked in the first and second positions, and at least in one intermediate position.

With this latch, the user can easily change the inner volume of the case between said first and second positions, it also being possible to place the case in at least one intermediate position.

### Brief description of the drawings

For the purpose of helping to make the foregoing description more readily understandable, it is accompanied by a set of drawings which, schematically and by way of illustration and not limitation, represent an embodiment.

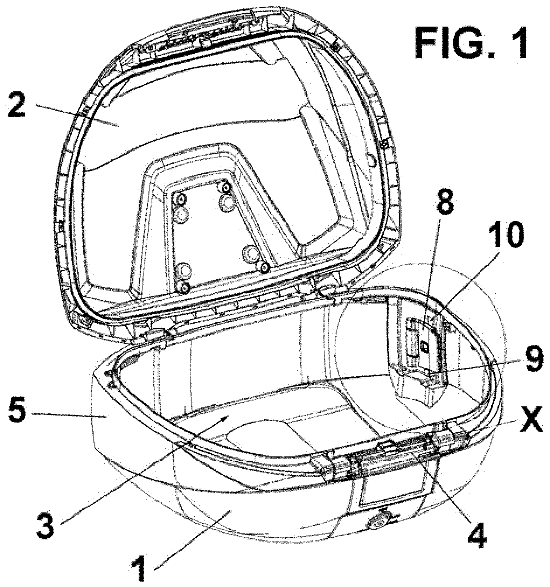

Figure 1 is a perspective view of the case for motorcycles according to the present invention, with the lid open;
Figure 2 is a perspective view of the details of the latch for changing the inner volume of the case according to the present invention;
Figures 3 to 5 are cross section views of the case according to the present invention with the lid closed, in a first position of lesser volume, an intermediate position and a second position of greater volume, respectively; and
Figure 6 is a perspective view of the details of the latch for changing the inner volume of the case according to the present invention, similar to Figure 2, but with the latch in the open position thereof to change the inner volume of the case.

### Description of a preferred embodiment

As can be seen in the figures, the case according to the present invention comprises a base 1 and a lid 2 that define an inner housing 3. The case further comprises a lock 4 for locking the lid 2 and the base 1 together, preventing access to the inner housing 3.

Furthermore, the case further comprises an extension 5 that pivots about the longitudinal axis X of said lock 4, between at least a first and a second position, said second position defining a volume of the inner housing 3 greater than the volume of the inner housing 3 when the extension 5 is in said first position.

The extension 5 surrounds the base 1 at least partially, preferably completely, and in the case of the embodiment represented, the height thereof is greater on the side farthest from the lock 4 than on the side of the lock 4, the height descending from said side farthest from the lock 4 to the side of the lock 4, as can be seen in the figures.

Said extension 5 comprises a border 6 and it is fixed to the lid 2 when the extension 5 is moved from the first position to the second position, or vice versa; in particular, the side of the lid 2 farthest from the lock 4 is attached to said extension 5.

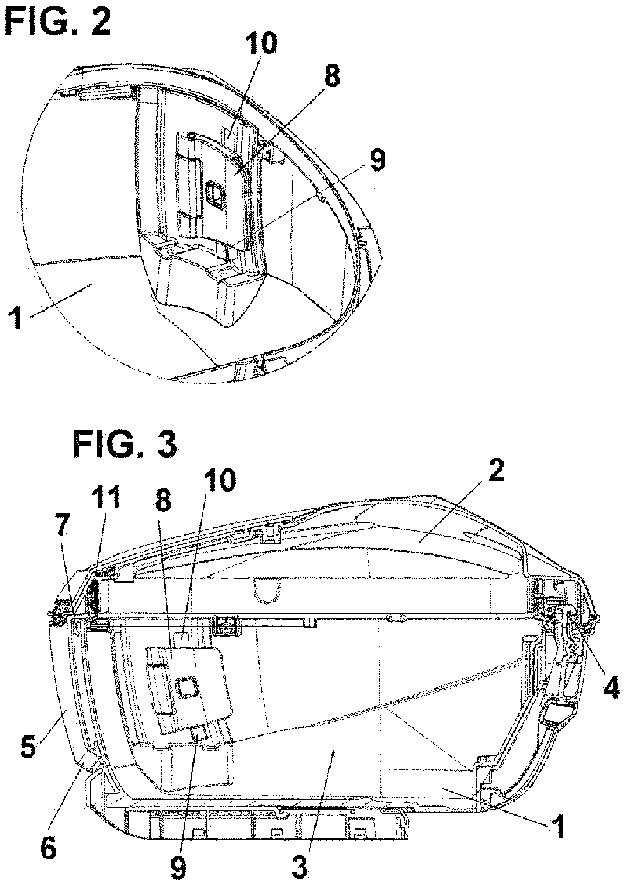

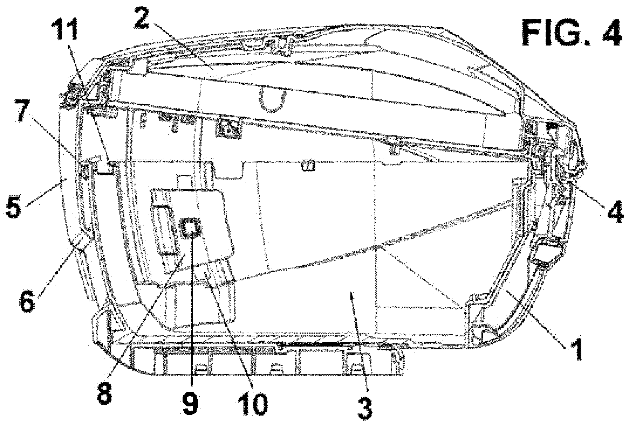

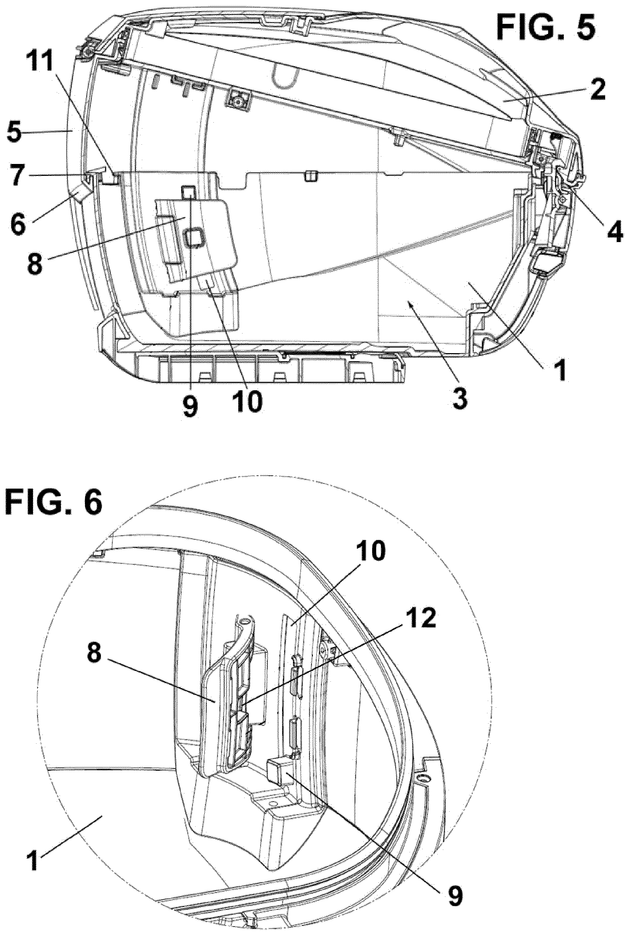

As can be seen in Figures 3 to 5, in the first position (Figure 3), the volume of the inner housing 3 is reduced, while in the second position (Figure 5), the volume of the housing 3 is greater. It should also be indicated that the extension 5 can be placed in at least one intermediate position between both positions, as shown in Figure 4.

To change the volume of the inner housing 3, the case according to the present invention comprises a latch 8, which is placed inside the base 1. To do so, the extension 5 comprises a protrusion 9 that can slide inside a groove 10 formed in the base.

When the latch 8 is opened (Figure 6), the extension 5 can be pivoted around the axis X. In the first position (Figure 2), the protrusion 9 will be in contact with the lower border of the latch 8, while in the second position (Figure 5), the protrusion 9 will be in contact with the upper border of the latch 8, preventing the extension 5 from returning to the first position by gravity.

Furthermore, when the extension 5 is to be placed in an intermediate position, the latch comprises at least one housing 12 (see Figure 6) in which the protrusion 9 will be housed.

In the first position, represented in Figure 3, the extension 5 rests on a stop 11, located on the upper part of the base 1.

In the second position, represented in Figure 5, the lid 2 and the extension 5 have pivoted around the longitudinal axis X of the lock 4, leading to an increase in the volume of the inner housing 3. In this position, the border 6 of the extension 5 rests on a complementary border 7 of the base 1.

In Figure 4, an intermediate position between the first and second positions has been represented, in which the protrusion 9 will be housed inside a housing 12.

Despite the fact that reference has been made to a specific embodiment of the invention, it is evident for the person skilled in the art that numerous variations and changes may be made to the case for motorcycles described, and that all the aforementioned details may be substituted by other technically equivalent ones, without detracting from the scope of protection defined by the attached claims.

## Claims

1. A case for motorcycles, which comprises a base (1) and a lid (2) that define an inner housing (3), the case also comprising a lock (4) for locking the lid (2) and the base (1) together, preventing access to the inner housing (3), the case further comprising an extension (5) that pivots about a longitudinal axis (X) of said lock (4), between at least a first and a second position, said second position defining a volume of the inner housing (3) greater than the volume of the inner housing (3) when the extension (5) is in said first position, wherein the case further comprises a latch (8) for unlocking the extension (5) and moving it between said first and second positions, or vice versa, **characterized by** said extension (5) comprising a protrusion (9) that slides inside a groove (10), and said latch (8) comprising one or more housings (12) complementary to said protrusion (9), such that the extension can be locked in the first and second positions, and at least in one intermediate position.

2. The case for motorcycles according to claim 1, in which said extension (5) is fixed to said lid (2) in the pivoting movement thereof between said first and second positions, or vice versa.

3. The case for motorcycles according to claim 1 or 2, in which said extension (5) is mounted on said base (1) in a slidable way between said first and second positions, or vice versa.

4. The case for motorcycles according to any of the preceding claims, in which the height of the extension (5) is greater on the side farthest from the lock (4) than on the side of the lock (4), the height descending from said side farthest from the lock (4) to the side of the lock (4).

5. The case for motorcycles according to any of the preceding claims, in which said extension (5) comprises a border (6) that in said second position butts against a complementary border (7) of the base (1) when the lid (2) is in said second position.

## Patentansprüche

1. Ein Behälter für Motorräder, umfassend ein Unterteil (1) und einen Deckel (2), die ein Gehäuseinneres (3) definieren, wobei der Behälter auch einen Verschluss (4) zum Zusammenschließen des Deckels (2) und des Unterteils (1) umfasst, um einen Zugang zum Gehäuseinneren (3) zu verhindern, wobei der Behälter weiter eine Verlängerung (5) umfasst, die um eine Längsachse (X) des Verschlusses (4) zwischen zumindest einer ersten und einer zweiten Position verschwenkt, wobei die zweite Position ein Volumen des Gehäuseinneren (3) definiert, welches größer als das Volumen des Gehäuseinneren (3) ist, wenn die Verlängerung (5) sich in der ersten Position befindet, wobei der Behälter weiterhin einen Riegel (8) zum Entsperren der Verlängerung (5) und zum Bewegen zwischen der ersten und der zweiten Position oder umgekehrt umfasst, **dadurch gekennzeichnet, dass**
die Verlängerung (5) einen Vorsprung (9) umfasst, der in einer Rinne (10) gleitet, und der Riegel (8) ein oder mehrere Gehäuse (12) umfasst, die komplementär zum Vorsprung (9) sind, derart, dass die Verlängerung in der ersten und zweiten Position und in mindestens einer Zwischenposition gesperrt werden kann.

2. Der Behälter für Motorräder gemäß Anspruch 1, wobei die Verlängerung (5) an dem Deckel (2) in deren Drehbewegung zwischen der ersten und der zweiten Position oder umgekehrt befestigt ist.

3. Der Behälter für Motorräder gemäß Anspruch 1 oder 2, wobei die Verlängerung (5) an dem Unterteil (1) auf einer zwischen der ersten und der zweiten Position oder umgekehrt verschiebbaren Weise befestigt ist.

4. Der Behälter für Motorräder gemäß einem der vorhergehenden Ansprüche, wobei die Höhe der Verlängerung (5) höher auf der von dem Verschluss (4) am weitesten entfernten Seite als auf der Seite des Verschlusses (4) ist, wobei die Höhe sich von dieser weit entferntesten Seite vom Verschluss (4) hin zur Seite des Verschlusses (4) verringert.

5. Der Behälter für Motorräder gemäß einem der vorhergehenden Ansprüche, wobei die Verlängerung (5) einen Rand (6) umfasst, der in der zweiten Position an einen komplementären Rand (7) des Unterteils (1) stößt, wenn der Deckel (2) sich in der zweiten Position befindet.

## Revendications

1. Coffre pour motocyclette comprenant une base (1) et un couvercle (2) formant un intérieur de boîtier (3), le coffre comportant également une serrure (4) pour verrouiller le couvercle (2) à la base (1) et pour interdire l'accès à l'intérieur de boîtier (3), le coffre comportant en outre une réhausse (5) qui pivote autour de l'axe longitudinal (X) de la serrure (4) entre une première et une seconde position, la seconde position définissant un volume d'intérieur de boîtier (3) supérieur au volume d'intérieur de boîtier (3) lorsque la réhausse (5) est dans sa première position, selon lequel, le coffre comporte en outre un loquet (8) pour débloquer la réhausse (5) et la déplacer entre sa première et sa seconde position ou inversement,
coffre **caractérisé en ce que**
la réhausse (5) comporte un relief (9) qui glisse dans une rainure (10) et le loquet (8) a plusieurs logements (12) complémentaires au relief (9) de façon que la réhausse puisse être verrouillée dans sa première ou sa seconde position et dans au moins une position intermédiaire.

2. Coffre pour motocyclette selon la revendication 1,
dans lequel la réhausse (5) est fixée au couvercle (2) pour son mouvement de pivotement entre la première et la seconde position et inversement.

3. Coffre pour motocyclette selon la revendication 1 ou 2,
dans lequel
la réhausse (5) est montée coulissant sur la base (1) entre la première et la seconde position et inversement.

4. Coffre pour motocyclette selon l'une quelconque des revendications précédentes,
dans lequel
la hauteur de la réhausse (5) est plus grande sur son côté le plus éloigné de la serrure (4) que sur son côté de la serrure (4), la hauteur diminuant à partir du côté le plus éloigné de la serrure (4) vers le côté, de la serrure (4).

5. Coffre pour motocyclette selon l'une quelconque des revendications précédentes,
dans lequel
la réhausse (5) comporte une fin de course (6) qui, dans la seconde position, bute contre une fin de course complémentaire (7) de la base (1) lorsque le couvercle (2) occupe sa seconde position.
